# EUROPEAN PATENT APPLICATION

(11) **EP 3 904 974 A1**
(43) Date of publication of application: **03.11.2021**
(21) Application number: 20172377.2
(22) Date of filing: 30.04.2020
(51) Int. Cl.: G05B 13/04

(54) **PREDICTING AT LEAST ONE FEATURE TO BE PREDICTED OF A TARGET ENTITY**

(71) Applicant: Siemens Aktiengesellschaft, 80333 München (DE)
(72) Inventor: Joblin, Mitchell, 81825 München (DE); Yee, Dianna, 81825 Munich (DE)

(57) **Abstract**

The invention is directed to Computer-implemented method for predicting at least one feature to be predicted of a target entity; comprising the steps: a. providing a graph database (10), wherein the graph database (10) represents a plurality of nodes (12) in a graph which are interconnected by respective edges (14); wherein each node (12) of the plurality of the nodes represents an entity; wherein each edge (14) of the plurality of the edges represents a relationship between the entities (S1); b. Providing at least one node feature for each node (12) of the plurality of nodes; wherein the at least one node feature is associated with the respective node in the graph (10, S2); c. Providing at least one historical feature for each node (12) of the plurality of nodes; wherein the at least one historical feature is associated with the respective node in the graph (10) and is indicative for the at least one feature to be predicted (S3); d. transforming the graph database (10) of a variable size into a respective single encoding (20) for each node (12) of the plurality of nodes using a trained machine learning model based on the provided input data with the graph database (10), the at least one node feature and at least one historical feature (S4); e.Predicting the respective at least one feature to be predicted for each node (12) of the plurality nodes using the trained machine learning model based on the at least one generated single encoding (20) of the node (12) (S5); and f. Providing the at least one predicted feature of the target entity (S6). Further, the invention relates to a corresponding technical unit and computer program product.

## Description

### 1.Technical field

The present invention relates to a computer-implemented method for predicting at least one feature to be predicted of a target entity. Further, the invention relates to a corresponding technical unit and a computer program product.

### 2.Prior art

Currently there is a trend of digitalization in the industry domain. Hence, e.g. a manufacturing process for a product may be digitally controlled. For describing several facets of this trend the term "Industry 4.0" (in German: "Industrie 4.0") is a commonly used. It has become not only a major part of today's industry, but it also drives the business in many industrial domains.

Considering complex industrial plants, the industrial plants usually comprise distinct parts, modules or units with a multiplicity of individual functions. Exemplary units include sensors and actuators. The units and functions have to be controlled and regulated in an interacting manner. They are often monitored, controlled and regulated by automation systems, for example the Simatic system of Siemens AG. The units can either exchange data directly with one another or communicate via a bus system. The units are connected to the bus system via parallel or, more often, serial interfaces.

The increasing digitalization allows for manufacturing or industrial installation of products in a production line of the industrial plant to be performed by robot units or other autonomous units in an automatic manner and thus efficiently at least in part up to now. However, with increasing digitalization it remains a challenge to manufacture enough products meeting the customer demand, but without incurring an excess of products and hence unnecessary costs.

The products in a production line are often manufactured and installed in product groups or product families. According to which, a group comprises multiple products which are interconnected in a complex manner. In other words, within a product group, the products are arranged according to a grouping criterion. For example, the products can be related to each other semantically and/or functionally. Other examples include that the products belong to the same product category, share the same raw materials required for manufacturing and are complementary products which are ordered together. Another example is that the products share a predecessor or successor relationship, in which the demand pattern of the successor may be highly related to the demand pattern of its predecessor.

Additionally, the countries in which the products are sold can highly influence the demand patterns within the region. For example, developing countries may have a drastically increasing trend in demand patterns. The demand patterns between different countries may also be related due to global economic factors. Such information about the products can be referred to as meta-data of the products.

Known approaches according to prior art for forecasting the customer demand as a forecast object do not consider the inter-product relationships sufficiently. Accordingly, the forecast object is the customer demand of a particular product over a particular forecast horizon. Thus, the customer demand can be equally referred to as product demand in the following. More specifically, the forecasting models according to prior art only consider metadata of the customer and historic demand. However, as discussed above, this metadata is usually related to other metadata of other forecast objects which is neglected.

Furthermore, known approaches fail in cases when a product is new, little or no historical data is available for this product.

It is therefore an objective of the present invention to provide a computer-implemented method for predicting at least one feature to be predicted of a target entity in an efficient and reliable manner.

### 3.Summary of the invention

This problem is according to one aspect of the invention solved by computer-implemented method for predicting at least one feature to be predicted of a target entity; comprising the steps:
a. Providing a graph database, wherein the graph database represents a plurality of nodes in a graph which are interconnected by respective edges; wherein
   each node of the plurality of the nodes represents an entity; wherein
   each edge of the plurality of the edges represents a relationship between the entities;
b. Providing at least one node feature for each node of the plurality of nodes; wherein the at least one node feature is associated with the respective node in the graph;
c. Providing at least one historical feature for each node of the plurality of nodes; wherein the at least one historical feature is associated with the respective node in the graph and is indicative for the at least one feature to be predicted;
d. transforming the graph database of a variable size into a respective single encoding for each node of the plurality of nodes using a trained machine learning model based on the provided input data with the graph database, the at least one node feature and at least one historical feature;
e. Predicting the respective at least one feature to be predicted for each node of the plurality nodes using the trained machine learning model based on the at least one generated single encoding of the node; and
f. Providing the at least one predicted feature of the target entity.

Accordingly, the invention is directed to a method for predicting at least one feature to be predicted of a target entity. Exemplary entities are the products and the customers. In a preferred embodiment, referring to the above, the entities are products.

Accordingly, in a preferred embodiment the target entity is a new product or an already existing product of a production line of an industrial plant and the feature to be predicted is the product demand or customer demand. In case of a new product, the product is not sold, thus the product demand or customer demand is unknown and not covered by the historical data. The product demand as feature to be predicted is predicted and provided as output of the method.

In the first steps a. to c., the input data sets are provided or received as input for step d., namely the graph database, the node features and the historical features. Preferably the graph database is a knowledge graph with nodes representing the entities and edges representing the relationships or connections. Thereby, the respective node or target node representing the target entity is part of the received graph database. In other words, the graph in step a. comprises the new node for transformation and prediction.

Each node can be assigned to a single feature or to a feature vector, accordingly a plurality of features. In a preferred embodiment the entities are products and the node features are features describing the respective products. In other words, the node features are features of the node.

Historical features are the features of already manufactured and sold products, e.g. product demands of sold products. The historical features can be equally referred to as historical data referring to e.g. the known past product demands. These features are used for both training the machine learning model and during run-time inference. The historical features are indicative for the feature to be predicted since future values are likely to be correlated to recent values in the past. The historical features are not necessarily just the known product demands, but the features can also be derived from the past demands. For example, features can be engineered by e.g. calculating the quarterly differing, trend estimation, etc. from the historical data and define this as the historical data features.

In the next step, this received input data sets are transformed into single encodings using machine learning. In other words, the data representation of variable dimension is transformed into a vector representation of fixed dimension. Accordingly, the encoding can be defined as vector representation of fixed size or dimension. There is in particular one encoding for each node in the graph, not a single encoding for the whole graph. This vector representation of each node encodes the neighborhood information of the target entity. The metadata of the product are inputs to the graph and therefore encoded within the latent feature space.

Thereby, the machine learning model is a trained machine learning model, in particular AI ("Artificial Intelligence") model during run-time. Thereby, any learning algorithm that can operate on non-Euclidean data, any graph neural network, message passing, neural message passing derivatives or graph kernel method that encoded nodes based on structural information can be applied.

In the last steps, the single node encodings are used as input for prediction and machine learning to predict and provide the respective at least one predicted feature. In other words, for each node encoding of the plurality of encodings, at least one predicted value is provided as output using machine learning.

Features of the product type-nodes can be the meta-data of the product. Additionally, the historical demand can be used.

In one aspect the entity is a product of a production line of an industrial device or other item regarding industrial manufacturing or industrial installation. Accordingly, the graph comprises interconnected products in context of Industry, as explained further above. The advantage lies in the fact, that the products can be manufactured and sold according to the specific predicted product demand, thereby overcoming the drawbacks of prior art. Thus, more explicitly, the method ensures that the needed or required number of products without any excess of resources are produced and the customer demand is met.

In one aspect the feature to be predicted is the product demand in form of the total number products or items to be sold and/or the at least one historical feature is the product demand or item demand in form of the total number sold products or items. Accordingly, the historical features are derived from historical data, such as the product demand or customer demand.

In one aspect the at least one historical feature is a time series of a plurality of already sold products over time and their respective historical time features.

In one aspect the historical features are product demands.

In one aspect the at least one node feature is a feature selected from the group comprising: product release data, product group, manufacturing region, price and bill of materials.

Additionally, the node can be enriched with meta-data, referring to meta-data features, such as information derived from product release data, a product group, a product line it belongs in, a manufacturing region, a historical price, a bill of materials, an industry application and a customer profile. In other words, the meta-data can be part of the node features.

Accordingly, the node features may comprise the aforementioned features and/or meta-data features. Nodes may be connected via edges if they for example share a predecessor-successor relationship, or are manufactured in the same region, or within the same product group, etc.

Such meta-data can be fused with the historical data for the forecasting task according to the following transformation embodiments.

In one aspect the transformation comprises the intermediate steps
- transforming the graph database of a variable size into a first encoding for each node of the plurality of nodes using a graph convolutional network based on the provided graph database and at least one node feature;
- transforming the at least one historical feature of a variable size into a second encoding for each node of the plurality of nodes using feature engineering or a neural network on the at least one historical feature; and
- concatenating the first and second encodings for each node of the plurality of nodes into a respective single encoding for each node of the plurality of nodes.

In one aspect the transformation comprises the intermediate steps
- fusing the at least one node feature and at least one historical feature into at least one fused node feature using feature-engineering or a neural network based on the provided graph database; and
- transforming the at least one fused node feature of a variable size into a respective single encoding for each node of the plurality of nodes using a graph convolutional network based on the provided graph database.

In one aspect the method further comprises the step of performing at least one action.

In one aspect the at least one action is selected from the group, comprising:
- Outputting the target entity, the at least one predicted feature, the graph database and/or any other related data;
- Storing the target entity, the at least one predicted feature, the graph database and/or any other related data;
- Displaying the target entity, the at least one predicted feature, the graph database and/or any other related data;
- Transmitting the target entity, the at least one predicted feature, the graph database and/or any other related data to a technical unit; wherein
   the technical unit is adapted to manufacture or install the target entity in a production line of an industrial device in accordance with the predicted feature;
- Manufacturing or Installing the target entity in a production line of the industrial device in accordance with the at least one predicted feature; and
- Evaluating the target entity, the at least one predicted feature, the graph database and/or any other related data.

Accordingly, the input data, data of intermediate method steps and/or resulting output data can be further handled. The output data is in particular the predicted feature or value e.g. the product demand of the product. One or more actions can be performed. The action can be equally referred to as measure.

These actions can be performed by one or more technical units, such as computing unit or robot unit. The actions can be performed gradually or simultaneously. Actions include e.g. storing and processing steps. The advantage is that appropriate actions can be performed in a timely manner. According to one preferred use case, the product can be manufactured and/or installed in a production line of an industrial plant in an autonomous manner and in line or in accordance with the predicted product demand.

Further use cases include the usage in a semi-automatic fashion or within a decision-support system. Further, it can be used in various aspects of the supply chain management: manufacturing, sales, and quality assurance.

Another example is that the, product, its product demand and/or a related notification can be displayed to a user by means of a display unit e.g. in combination with its related products.

A further aspect of the invention is a technical unit for performing the aforementioned method.

The technical unit may be realized as any device, or any means, for computing, in particular for executing a software, an app, or an algorithm. For example, the unit may comprise a central processing unit (CPU) and a memory operatively connected to the CPU. The unit may also comprise an array of CPUs, an array of graphical processing units (GPUs), at least one application-specific integrated circuit (ASIC), at least one field-programmable gate array, or any combination of the foregoing. The unit may comprise at least one module which in turn may comprise software and/or hardware. Some, or even all, modules of the unit may be implemented by a cloud computing platform.

A further aspect of the invention is a computer program product directly loadable into an internal memory of a computer, comprising software code portions for performing the steps according to the aforementioned method when said computer program product is running on a computer.

### 4.Short description of the drawings

In the following detailed description, presently preferred embodiments of the invention are further described with reference to the following figures:
- Fig. 1: illustrates a flowchart of the method according to the invention.
- Fig. 2: illustrates an exemplary knowledge graph as graph database according to an embodiment.
- Fig. 3: illustrates the method according to an embodiment including the concatenation of two separately determined encodings.
- Fig. 4: illustrates the method according to an alternative embodiment with early fusion of metadata and historical data features as input features on the node.

### 5.Detailed description of preferred embodiments

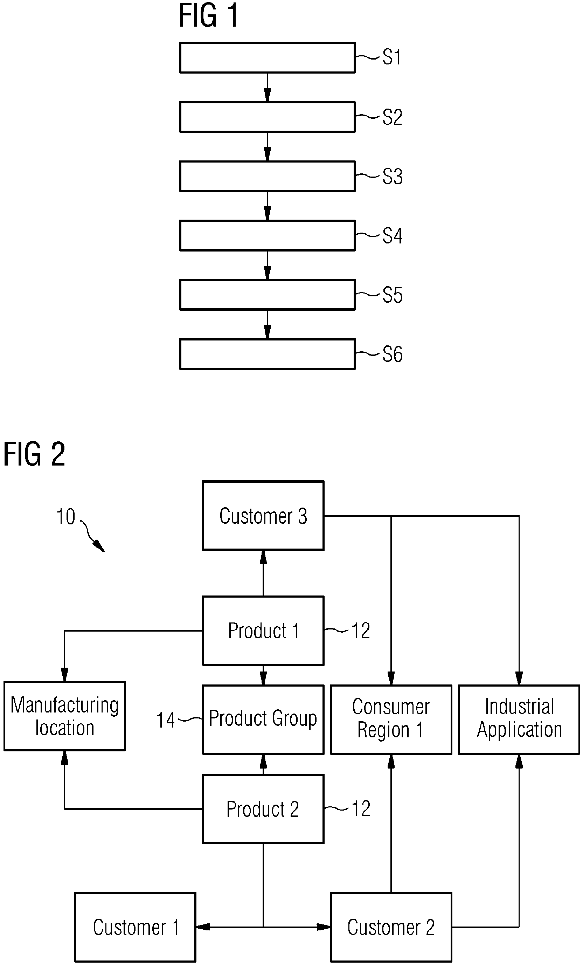

Fig. 1 illustrates a flowchart of the method according to the invention. The input data is provided in the first steps S1 to S3, wherein the input data comprises a graph database, preferably a knowledge graph 10.

As illustrated in Figure 2, the metadata of an entity can be expressed using a knowledge graph representation 10. Each node 12 represents an entity within the knowledge graph 10. In a preferred embodiment, the entities are products. The nodes are interconnected via edges 14. Further, multiple nodes 12 may be connected to a common entity such as an instance of a region or product group. According to Figure 2, the two exemplary products as entities 12 contain many import commonalities, such as the same product group or manufacturing region. Moreover, the customers can be from the same industrial application area, thereby suggesting the demand behavior may be similar. The demand behavior can be equally referred to the product demand, which is predicted using the method according to the invention in the steps S4 to S6.

Graph convolutional network ("GCN") approaches can be used to learn feature representations which consider context information encoded in the local neighborhood of the entities to include such higher-order information.

The knowledge graph 10 representation is flexible or of variable size due to its existence on a non-Euclidean domain. Thus, the limitation of a fixed neighborhood size architecture can be mitigated when using GCN approaches, in comparison to current state-of-the-art approaches for feature representation. According to which, the graph representation 10 is transformed into another representation 20, especially vector representation 20 of fixed size S4 which can then be advantageously used to predict the feature to be predicted or feature object using a trained machine learning model S5, preferably GCN.

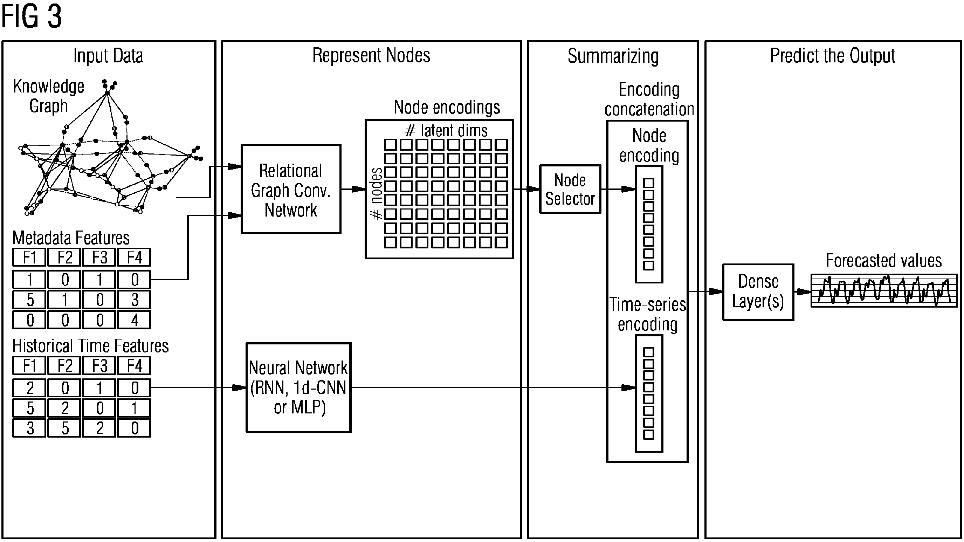

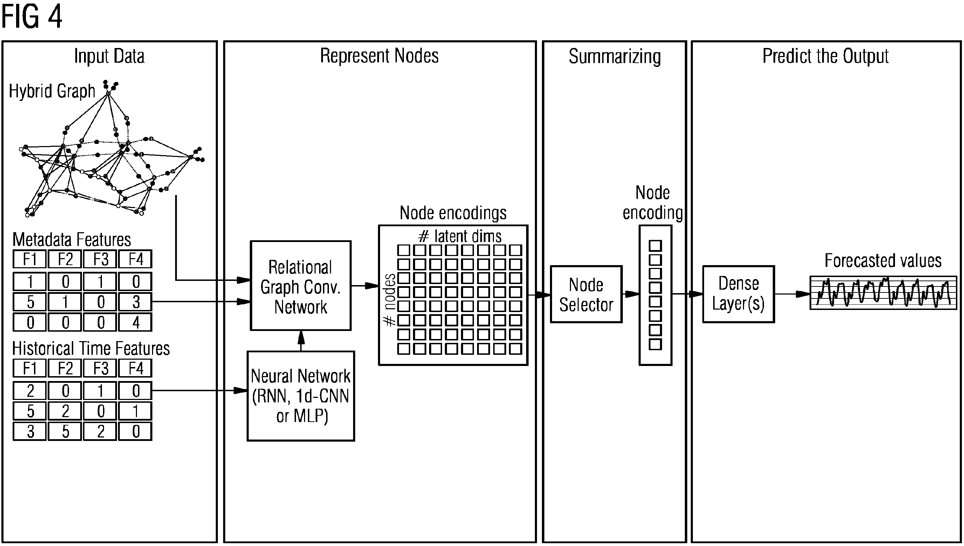

Figure 3 and 4 illustrate alternative embodiments for said transformation S4, as explained further below in more detail.

### Transformation with the concatenation of two separately determined encodings

According to Figure 3, the features of the time series are augmented with node embeddings derived using the metadata of the entities. The embeddings which represent the metadata of the entities are computed using a GCN, while the historical time series of the entity are separately computed. Such feature embeddings of the entities can either be computed using hand-engineered features or feature learning with neural networks. In the latter approach, the latent features are learned by formulating an end-to-end solution where the model prediction loss is used to adjust the feature extraction layers. The concatenation of both these types of latent features of the entities therefore results in an enriched representation of the entities.

### Transformation with early fusion of metadata and historical data features

According to Figure 4, the graph data model is used as a medium for learning relevant aggregations across different entities within the knowledge graph 10. The historical time-series data are represented as features on the node 12. Namely, an adjacency matrix is used as information for realizing the type of relations within the knowledge graph 10 which can be exploited when learning a generalized pattern between different entities. Enriching the forecasting feature space to include such semantic information can improve forecasting performance by providing knowledge sharing between the entities. This is particularly advantageous for forecasting new products as entities with little to no historical data. Additionally, it is more computationally efficient to create a model which generalizes over different aggregations, such as product groups, material sources and regions.

### Reference signs

- S1 to S6: Method steps
- 10: graph data base, knowledge graph
- 12: nodes
- 14: edges
- 20: single encoding, vector representation

## Claims

1. Computer-implemented method for predicting at least one feature to be predicted of a target entity; comprising the steps:
a. Providing a graph database (10), wherein the graph database (10) represents a plurality of nodes (12) in a graph which are interconnected by respective edges (14); wherein each node (12) of the plurality of the nodes represents an entity; wherein
each edge (14) of the plurality of the edges represents a relationship between the entities (S1);
b. Providing at least one node feature for each node (12) of the plurality of nodes; wherein the at least one node feature is associated with the respective node in the graph (10, S2);
c. Providing at least one historical feature for each node (12) of the plurality of nodes; wherein the at least one historical feature is associated with the respective node in the graph (10) and is indicative for the at least one feature to be predicted (S3);
d. transforming the graph database (10) of a variable size into a respective single encoding (20) for each node (12) of the plurality of nodes using a trained machine learning model based on the provided input data with the graph database (10), the at least one node feature and at least one historical feature (S4);
e. Predicting the respective at least one feature to be predicted for each node (12) of the plurality nodes using the trained machine learning model based on the at least one generated single encoding (20) of the node (12) (S5); and
f. Providing the at least one predicted feature of the target entity (S6).

2. Computer-implemented according to claim 1, wherein the entity is a product of a production line of an industrial device or other item regarding industrial manufacturing or industrial installation.

3. Computer-implemented method according to claim 1 or claim 2, wherein the feature to be predicted is the product demand in form of the total number products or items to be sold and/or the at least one historical feature is the product demand or item demand in form of the total number sold products or items.

4. Computer-implemented method according any preceding claims, wherein the at least one historical feature is a time series of a plurality of already sold products over time and their respective historical time features.

5. Computer-implemented method according to claim 4, wherein the historical features are product demands.

6. Computer-implemented method according any of the preceding claims, wherein the at least one node feature is a feature selected from the group comprising: product release data, product group, manufacturing region, price and bill of materials.

7. Computer-implemented method according to one of the preceding claims 1 to 6, wherein the transformation comprises the intermediate steps
- transforming the graph database of a variable size into a first encoding for each node of the plurality of nodes using a graph convolutional network based on the provided graph database and at least one node feature;
- transforming the at least one historical feature of a variable size into a second encoding for each node of the plurality of nodes using feature engineering or a neural network on the at least one historical feature; and
- concatenating the first and second encodings for each node of the plurality of nodes into a respective single encoding for each node of the plurality of nodes.

8. Computer-implemented method according to one of the preceding claims 1 to 6, wherein the transformation comprises the intermediate steps:
- fusing the at least one node feature and at least one historical feature into at least one fused node feature using feature-engineering or a neural network based on the provided graph database; and
- transforming the at least one fused node feature of a variable size into a respective single encoding for each node of the plurality of nodes using a graph convolutional network based on the provided graph database.

9. Computer-implemented method according to any of the preceding claims, wherein the method further comprises the step of performing at least one action.

10. Computer-implemented method according to claim 9, wherein the at least one action is selected from the group, comprising:
- Outputting the target entity, the at least one predicted feature, the graph database and/or any other related data;
- Storing the target entity, the at least one predicted feature, the graph database and/or any other related data;
- Displaying the target entity, the at least one predicted feature, the graph database and/or any other related data;
- Transmitting the target entity, the at least one predicted feature, the graph database and/or any other related data to a technical unit; wherein
the technical unit is adapted to manufacture or install the target entity in a production line of an industrial device in accordance with the predicted feature;
- Manufacturing or Installing the target entity in a production line of the industrial device in accordance with the at least one predicted feature; and
- Evaluating the target entity, the at least one predicted feature, the graph database and/or any other related data.

11. A technical unit for performing the method steps according to any of the preceding claims.

12. A computer program product directly loadable into an internal memory of a computer, comprising software code portions for performing the steps according to any of the claims 1 to 10 when said computer program product is running on a computer.
